(19) **Europäisches Patentamt European Patent Office Office européen des brevets**

(11) **EP 2 344 903 B1**

(12) **FASCICULE DE BREVET EUROPEEN**

(45) Date de publication et mention
de la délivrance du brevet:
**20.04.2016 Bulletin 2016/16**

(21) Numéro de dépôt: **09745062.1**

(22) Date de dépôt: **04.11.2009**

(51) Int Cl.:
***G01S 3/14*** *(2006.01)*

(86) Numéro de dépôt international:
**PCT/EP2009/064598**

(87) Numéro de publication internationale:
**WO 2010/052235 (14.05.2010 Gazette 2010/19)**

(54) **PROCEDE D'ESTIMATION DE L'ELLIPTICITE DE POLARISATION D'UN SIGNAL DE REPONSE D'ANTENNE A UNE ONDE ELECTROMAGNETIQUE INCIDENTE**

VERFAHREN ZUR SCHÄTZUNG DER POLARISATIONSELLIPTIZITÄT EINES ANTENNENANTWORTSIGNALS AUF EINE EINFALLENDE ELEKTROMAGNETISCHE WELLE

METHOD FOR ESTIMATING THE POLARISATION ELLIPTICITY OF AN ANTENNA RESPONSE SIGNAL TO AN INCIDENT ELECTROMAGNETIC WAVE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.11.2008 FR 0806235**

(43) Date de publication de la demande:
**20.07.2011 Bulletin 2011/29**

(73) Titulaire: **THALES**
**92200 Neuilly-sur-Seine (FR)**

(72) Inventeurs:
• **LECCA, Arnaud**
**92704 Colombes Cedex (FR)**
• **MERLET, Eric**
**F-92700 Colombes (FR)**
• **MESNAGE, Jean-Christophe**
**F-95300 Pontoise (FR)**
• **ROGIER, Jean-Luc**
**F-95120 Ermont (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**DE-A1- 2 740 389      DE-A1- 2 925 723**

• **LERTES E ET AL: "WATSON-WATT-PEILER MIT DREIDIMENSIONALEM RAHMEN" MESSEN PRUFEN AUTOMATISIEREN, HANS HOLZMANN VERLAG. BAD WORISHOFEN, DE, no. 6, 1 juin 1989 (1989-06-01), pages 282-285, XP000032843**
• **LINA XU ET AL: "Joint Parameter Estimation of Two-Dimensional Angle/Delay/Polarization for Multipath Channels" CIRCUITS AND SYSTEMS FOR COMMUNICATIONS, 2008. ICCSC 2008. 4TH IEEE INTERNATIONAL CONFERENCE ON, IEEE, PISCATAWAY, NJ, USA, 26 mai 2008 (2008-05-26), pages 737-740, XP031268795 ISBN: 978-1-4244-1707-0**

**Description**

La présente invention concerne un procédé d'estimation de l'ellipticité de polarisation d'un signal de réponse d'antenne à une onde électromagnétique incidente. L'invention s'applique notamment à la discrimination des ondes ionosphériques des ondes de sol et/ou de mer, en particulier dans le cadre d'un système de surveillance, d'écoute ou de goniométrie sur des signaux en bande HF.

Un grand nombre de systèmes de surveillance, d'écoute, de goniométrie ou plus généralement les systèmes détectant et traitant des signaux électromagnétiques sont employés pour traiter des ondes provenant directement d'émetteurs au sol. Or, parfois, des ondes ionosphériques viennent perturber leur fonctionnement, ces ondes pouvant être confondues avec des signaux issus d'un émetteur au sol.

Les ondes ionosphériques peuvent se propager sur une grande distance, de l'ordre de plusieurs milliers de kilomètres. Par ailleurs, lorsque les ondes radioélectriques produites par un émetteur pénètrent l'atmosphère jusqu'à l'ionosphère, elles subissent continuellement des phénomènes de réfraction conduisant une partie de l'énergie desdites ondes à redescendre vers la terre. Une portion de cette énergie peut alors être captée par un récepteur même si celui-ci est très éloigné de l'émetteur initial. Si, par exemple, ce récepteur est utilisé par un goniomètre pour déterminer la direction de signaux issus d'émetteurs proches, les ondes ionosphériques reçues peuvent altérer par brouillage les mesures d'angle obtenues. De plus, indépendamment de tout phénomène de brouillage, une onde de polarisation initiale verticale est transformée après une propagation de type ionosphérique en onde de polarisation quelconque, donc susceptible de mettre en échec tout dispositif de radiogoniométrie conçu pour fonctionner de manière optimale face à des ondes incidentes à site nul et de polarisation verticale. C'est par exemple le cas du goniomètre dit de « Watson-Watt ».

Il est alors souhaitable de distinguer les ondes ionosphériques des ondes de mer et/ou de sol. Par ailleurs, on souhaite, dans le cas de mesures de goniométrie, évaluer la validité desdites mesures en fonction du type d'onde reçu par l'antenne du goniomètre (onde ionosphérique ou onde de sol/mer).

Un but de l'invention est de distinguer les ondes ionosphériques des ondes de mer et/ou de sol. Le document DE 27 40 389 A1 décrit un procédé d'estimation de l'ellipticité de polarisation d'un signal de réponse d'antenne à cadres croisés ou d'un réseau antennaire de type Adcock à une onde électromagnétique incidente reçue sur ladite antenne. Le problème que la présente invention se propose est de fournir une méthode alternative pour déterminer l'ellipticité de polarisation d'un signal de réponse d'antenne à cadres croisés et de l'utiliser pour distinguer les ondes ionosphériques des ondes de mer et/ou de sol.

A cet effet, l'invention a pour objet un procédé d'estimation de l'ellipticité $\tau$ de polarisation d'un signal de réponse d'antenne à cadres croisés ou d'un réseau antennaire de type Adcock à une onde électromagnétique incidente reçue sur ladite antenne, caractérisé en ce qu'il comporte au moins les étapes suivantes :

- o mesurer le déphasage $\Delta\varphi$ entre les signaux acquis respectivement sur la voie cosinus et sinus de l'antenne ;
- o mesurer le rapport R entre les amplitudes des signaux acquis respectivement sur la voie cosinus et sinus de l'antenne ;
- o déterminer l'angle d'ellipticité $\tau$ en fonction du déphasage $\Delta\varphi$ et du rapport R.

Selon une mise en oeuvre du procédé, ledit angle d'ellipticité $\tau$ est déterminé par la relation suivante :

$$\sin(2.\tau) = \frac{2}{R + \dfrac{1}{R}} . \sin(\Delta\varphi)$$

avec $R = \dfrac{\|\overline{a_c}\|}{\|\overline{a_s}\|}$, $\|\overline{a_c}\|$ étant l'amplitude du signal reçu sur le cadre cosinus, et $\|\overline{a_s}\|$ étant l'amplitude du signal reçu sur le cadre sinus.

L'invention a également pour objet un procédé de discrimination des ondes ionosphériques des ondes de mer et/ou de sol comprenant au moins les étapes suivantes :

- o détecter une onde électromagnétique sur une antenne à cadres croisés ou un réseau antennaire de type Adcock ;
- ∘ déterminer l'angle d'ellipticité $\tau$ de polarisation du signal de réponse d'antenne à l'onde reçue en exécutant les étapes du procédé décrit plus haut ;
- ∘ tester la valeur de l'angle d'ellipticité $\tau$ : si sa valeur est supérieure à une valeur de seuil choisie, alors classer ladite onde comme une onde ionosphérique.

Selon une mise en oeuvre du procédé de discrimination des ondes ionosphériques des ondes de mer et/ou de sol, à l'issue du test de la valeur d'angle d'ellipticité τ, si la valeur d'ellipticité est inférieure à la valeur de seuil choisie, alors classer ladite onde comme une onde de sol et/ou de mer.

Selon une mise en oeuvre du procédé de discrimination des ondes ionosphériques des ondes de mer et/ou de sol, à l'issue du test de la valeur d'angle d'ellipticité τ, si cette valeur d'ellipticité est inférieure à la valeur de seuil choisie, alors réitérer l'étape de détection et tester de manière récurrente au cours du temps la valeur de l'excursion de l'angle d'ellipticité τ : si cette excursion est supérieure à une deuxième valeur de seuil choisie, alors classer l'onde comme une onde ionosphérique.

L'invention a également pour objet un dispositif placé au sol ou en mer comprenant une antenne de réception à cadres croisés ou un réseau antennaire de type Adcock et un module de traitement mettant en oeuvre le procédé d'estimation de l'angle d'ellipticité τ tel que décrit plus haut afin de déterminer l'angle d'ellipticité τ de polarisation d'un signal de réponse de l'antenne à une onde électromagnétique reçue par l'antenne de réception ou le réseau antennaire.

D'autres caractéristiques apparaîtront à la lecture de la description détaillée donnée à titre d'exemple et non limitative qui suit faite en regard de dessins annexés qui représentent :

- les figures 1a et 1b, une vue en perspective et de dessus d'un premier exemple d'antenne à cadres croisés recevant les signaux traités par le procédé selon l'invention,
- les figures 2a et 2b, une vue en perspective et de dessus d'un deuxième exemple d'antenne à cadres croisés recevant les signaux traités par le procédé selon l'invention,
- la figure 3a, un graphique illustrant un déphasage entre des signaux reçus sur les cadres de l'antenne lorsque l'onde porteuse desdits signaux est polarisée verticalement,
- la figure 3b, un graphique illustrant un déphasage entre des signaux reçus sur les cadres de l'antenne lorsque l'onde porteuse desdits signaux n'est pas polarisée verticalement,
- la figure 4, un synoptique présentant les étapes d'un premier mode de mise en oeuvre du procédé selon l'invention,
- la figure 5, un synoptique présentant une première méthode utilisant le procédé selon l'invention pour discriminer les ondes ionosphériques des ondes de sol et/ou de mer,
- la figure 6, un synoptique présentant une deuxième méthode, dérivée de la première méthode présentée en figure 5 pour discriminer les ondes ionosphériques des ondes de sol et/ou de mer,
- la figure 7, une illustration d'un dispositif mettant en oeuvre le procédé d'estimation de l'angle d'ellipticité τ selon l'invention.

Dans un souci de clarté, les mêmes références dans des figures différentes désignent les mêmes objets.

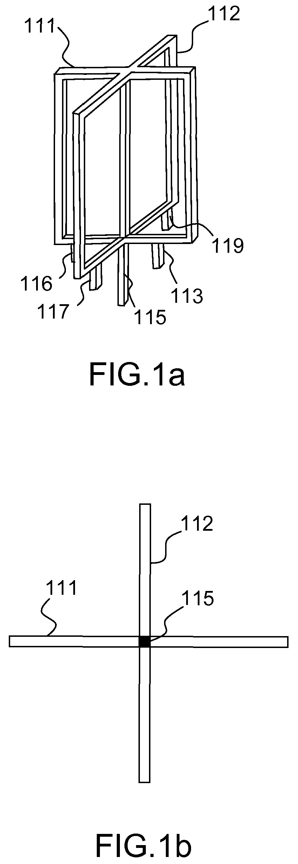

Les figures 1a et 1b présentent un premier exemple d'antenne à cadres croisés recevant les signaux traités par le procédé de mesure d'angle selon l'invention. La figure 1a est une vue en perspective de l'antenne, la figure 1b montrant l'antenne vue de dessus.

L'antenne 100 comporte un premier cadre 111 orthogonal à un second cadre 112, les deux cadres 111, 112 étant, dans l'exemple, formés par des rectangles métalliques maintenus par un support 115 et inscrits dans des plans sensiblement verticaux. Le premier cadre 111 est parfois qualifié de «cadre sinus », le deuxième cadre 112 étant qualifié de « cadre cosinus ». L'antenne 100 comporte une troisième voie de réception sous la forme, dans l'exemple, d'un monopôle réalisé avec des tiges métalliques verticales 116, 117, 118, 119 placées sous les cadres 111, 112.

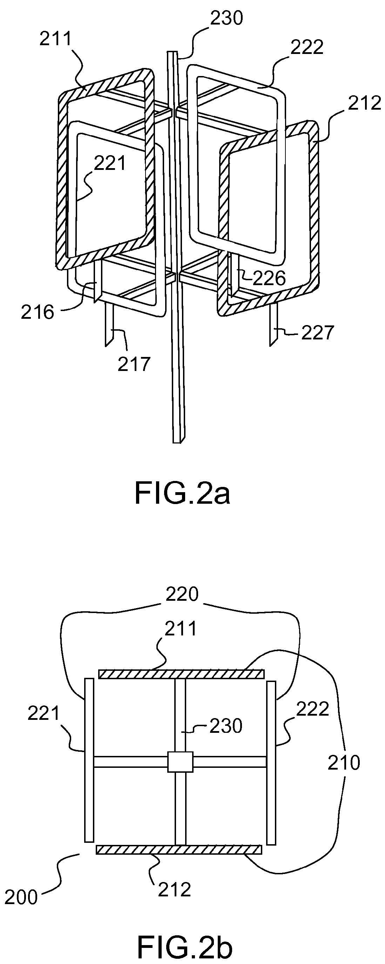

Les figures 2a et 2b présentent un deuxième exemple d'antenne à cadres croisés recevant les signaux traités par le procédé de mesure d'angle selon l'invention. La figure 2a est une vue en perspective de l'antenne, la figure 2b montrant l'antenne vue de dessus.

L'antenne 200 comporte deux paires 210, 220 de cadres maintenues par un support 230, les cadres de chaque paire 210, 220 étant parallèles entre-eux, les cadres 211, 212 de la première paire 210 étant orthogonaux aux cadres 221, 222 de la deuxième paire 220, tous les cadres 211, 212, 221, 222 de l'antenne étant, dans l'exemple, des rectangles métalliques inscrits dans des plans sensiblement verticaux. Dans l'exemple, les paires 210, 220 de cadres sont maintenues autour du support 230 de telle manière qu'elle forment sensiblement un carré vu de dessus. Dans l'exemple, l'antenne comporte également, sous chaque cadre 211, 212, 221, 222, une tige métallique 216, 217 226, 227, sensiblement verticale, l'ensemble de ces tiges 216, 217 226, 227 formant la voie monopôle de l'antenne. Cette antenne est, d'un point de vue théorique, équivalente à l'antenne présentée en figures 1a, 1b. Par la suite, on parlera de « cadre sinus » et de « cadre cosinus » en référence au premier modèle d'antenne présenté en figures 1a, 1b, ce vocabulaire s'appliquant aux paires 210, 220 de cadres 211, 212, 221, 222 lorsque le procédé est mis en oeuvre sur le deuxième modèle d'antenne présenté en figures 2a, 2b.

Selon un autre mode de mise en oeuvre du procédé selon l'invention, l'antenne à cadres croisés est remplacée par un réseau antennaire de type Adcock, ce type de réseau antennaire pouvant être modélisé de manière analogue aux antennes à cadres croisés, c'est-à-dire au moins par un cadre sinus et un cadre cosinus.

Par ailleurs, le monopôle de l'antenne peut être remplacé par un dipôle ou tout autre antenne servant de voie de référence.

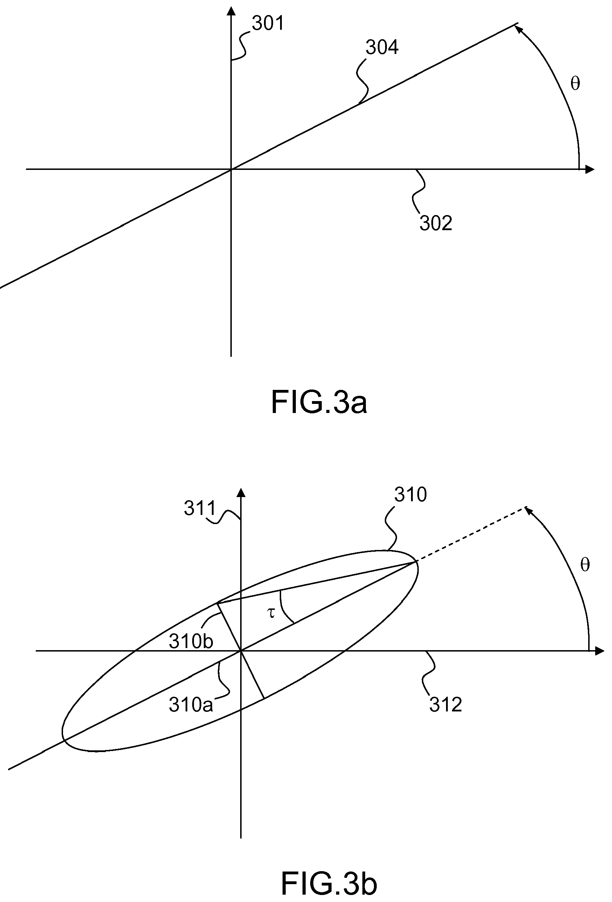

La figure 3a illustre, par un graphique, le déphasage entre des signaux reçus sur les cadres de l'antenne lorsque l'onde porteuse desdits signaux est polarisée verticalement. La tension reçue par le cadre sinus est représentée sur l'axe 301 des ordonnées, tandis que la tension reçue par le cadre cosinus est représentée sur l'axe 302 des abscisses. Le déphasage entre les signaux reçus est représenté par une droite 304.

Lorsque l'onde porteuse du signal est polarisé non verticalement ou qu'elle a subi l'influence de réflecteurs à proximité de l'antenne réceptrice, les signaux reçus sur les voies sinus et cosinus sont affublés d'un déphasage supplémentaire induisant une réponse elliptique des cadres, comme l'illustre la figure 3b.

La figure 3b illustre, par un graphique, le déphasage entre des signaux reçus sur les cadres de l'antenne lorsque l'onde porteuse desdits signaux est polarisée elliptiquement. La tension reçue par le cadre sinus est représentée sur l'axe 311 des ordonnées, tandis que la tension reçue par le cadre cosinus est représentée sur l'axe 312 des abscisses. Le déphasage entre les signaux reçus est représenté par une ellipse 310.

Le signal reçu sur le monopôle et les deux cadres cosinus et sinus d'une antenne peut alors s'exprimer comme suit :

$$\begin{cases} U_0(t) = \mathrm{Re}(\beta.s(t).e^{j\varpi t}) = \mathrm{Re}(\overline{a}_0(t).e^{j\varpi t}) \\ U_c(t) = \mathrm{Re}(\alpha.s(t).\cos(\theta).e^{j\varpi t}) = \mathrm{Re}(\overline{a}_c(t).e^{j\varpi t+\varphi_0+\Delta\varphi}) \\ U_s(t) = \mathrm{Re}(\alpha.s(t).\sin(\theta).e^{j\varpi t}) = \mathrm{Re}(\overline{a}_s(t).e^{j(\varpi t+\varphi_0)}) \end{cases}$$

où $U_0$, $U_c$ et $U_s$ désignent les tensions en sortie d'antenne respectivement sur le monopôle, sur le cadre cosinus et sur le cadre sinus, s(t) désignant le signal modulant, w désignant la pulsation de l'onde porteuse, les termes complexes $\alpha$ et $\beta$ étant respectivement dépendants de la hauteur efficace d'un cadre et du monopôle, les termes $\overline{a}_0$, $\overline{a}_c$ et $\overline{a}_s$ désignant les enveloppes complexes des signaux, $\varphi_0$ désignant la différence de phase entre le cadre sinus et le monopôle, $\Delta\varphi$ désignant le déphasage entre le signal reçu sur le cadre sinus et le cadre cosinus, le déphasage $\Delta\varphi$ étant nul lorsque l'onde est polarisée verticalement. Les coefficients $\alpha$ et $\beta$ sont déterminés lors de la calibration de l'antenne dans son environnement d'utilisation au moyen d'une onde polarisée verticalement et d'incidence nulle en comparant la réponse de l'antenne à la réponse théorique de l'antenne (en $\cos(\theta)$ et $\sin(\theta)$ avec $\alpha$ et $\beta$ égaux à 1).

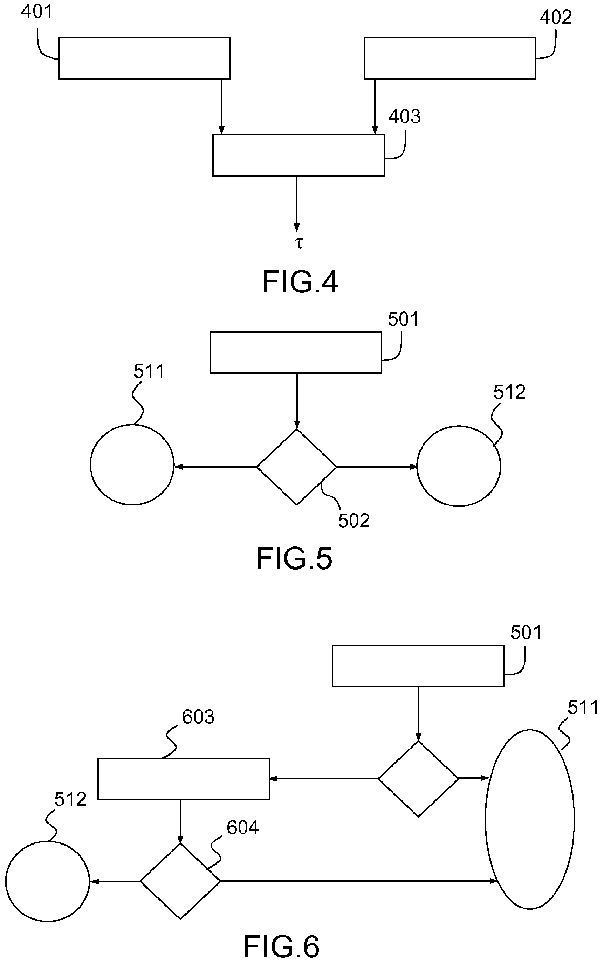

La figure 4, présente, à travers un synoptique, les étapes d'un premier mode de mise en oeuvre du procédé selon l'invention. Le procédé selon l'invention estime l'angle d'ellipticité $\tau$ de polarisation du signal de réponse d'antenne à l'onde porteuse reçue.

Dans un premier temps 401, le déphasage $\Delta\varphi$ entre le signal de réponse sur le cadre sinus et le cadre cosinus est mesuré. Parallèlement 402, le rapport entre l'amplitude $\|\overline{a}_c\|$ du signal de réponse sur le cadre cosinus et l'amplitude $\|\overline{a}_s\|$ du signal de réponse sur le cadre sinus est déterminé. Dans un deuxième temps 403, l'angle de gisement d'arrivée de l'onde porteuse des signaux est déterminé à partir du déphasage $\Delta\varphi$ et du rapport R entre $\|\overline{a}_c\|$ et $\|\overline{a}_s\|$. L'angle de gisement d'arrivée $\tau$ peut en effet être exprimé en fonction de ces deux valeurs $\Delta\varphi$ et R comme suit :

$$\sin(2.\tau) = \frac{2.\|\overline{a}_c\|\|\overline{a}_s\|}{\|\overline{a}_c\|^2 + \|\overline{a}_s\|^2}.\sin(\Delta\varphi) = \frac{2}{\dfrac{\|\overline{a}_c\|}{\|\overline{a}_s\|} + \dfrac{\|\overline{a}_s\|}{\|\overline{a}_c\|}}.\sin(\Delta\varphi)$$

La valeur d'angle d'ellipticité $\tau$ ainsi calculée peut permettre, par exemple, de distinguer les ondes ionosphériques des ondes de mer et/ou de sol, comme l'illustre la figure 5.

La figure 5 présente, à travers un synoptique, une méthode utilisant le procédé selon l'invention pour discriminer les ondes ionosphériques des ondes de sol et/ou de mer.

Une première étape 501 d'estimation de l'angle d'ellipticité $\tau$ est suivie d'une étape de test 502 comparant l'angle $\tau$ estimé avec un seuil fixé à l'avance. Si la valeur $\tau$ d'angle dépasse le seuil, alors l'onde est considérée comme une onde ionosphérique 511. Si la valeur $\tau$ d'angle ne dépasse pas le seuil fixé, l'onde est considérée comme une onde de mer et/ou de sol 512.

Ainsi, grâce au procédé selon l'invention, il devient aisé d'éviter d'effectuer des traitements sur les ondes ionosphériques reçues par une antenne lorsque, par exemple, ces ondes sont considérées comme parasites et engendrent des mesures incohérentes.

La figure 6 illustre une deuxième méthode, dérivée de la première méthode présentée en figure 5 pour discriminer les ondes ionosphériques des ondes de sol et/ou de mer.

Une première étape 501 d'estimation de l'angle d'ellipticité τ est suivie d'une première étape de test 502 comparant l'angle τ estimé avec un premier seuil. Si la valeur d'angle dépasse ce premier seuil, alors l'onde est considérée comme une onde ionosphérique 511. Sinon, une étape de pistage 603 est exécutée.

Cette étape de pistage 603 permet de suivre la valeur d'angle d'ellipticité τ dans le temps. Une deuxième étape de test 604 permet ensuite de déterminer, en fonction de l'excursion de la valeur d'angle d'ellipticité, si l'onde est une onde ionosphérique 511. Dans l'exemple, cette deuxième étape de test 604 considère l'onde comme une onde ionosphérique 511 si l'excursion dans le temps de la valeur d'angle d'ellipticité τ dépasse un second seuil. Sinon, l'onde est considérée comme une onde de sol et/ou de mer 512.

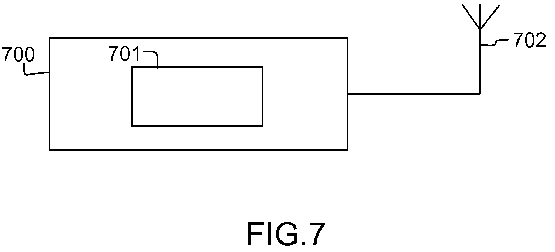

Comme l'illustre la figure 7, le procédé d'estimation de l'angle d'ellipticité τ selon l'invention peut être mis en oeuvre dans un dispositif placé au sol ou en mer. Le dispositif 700 comporte un module de traitement 701 permettant, à partir des signaux reçus par une antenne 702, d'estimer ledit angle d'ellipticité τ. Le dispositif peut ainsi être utilisé, par exemple, pour discriminer les ondes ionosphériques des ondes de sol et/ou de mer.

Le procédé d'estimation de l'angle d'ellipticité τ selon l'invention peut également permettre d'attribuer une note de qualité à une mesure de goniométrie. En effet, lorsqu'on souhaite effectuer des mesures de goniométrie de signaux issus d'émetteurs au sol, la réception d'une onde ionosphérique peut perturber les mesures. Aussi, on peut attribuer une note de qualité décroissante en fonction de la valeur d'ellipticité τ de réponse d'antenne. Les mesures de goniométrie réalisées sur des émissions considérées comme ionosphériques peuvent alors être écartées.

## Revendications

1. Procédé d'estimation de l'ellipticité τ de polarisation d'un signal de réponse d'antenne à cadres croisés ou d'un réseau antennaire de type Adcock à une onde électromagnétique incidente reçue sur ladite antenne, **caractérisé en ce qu'**il comporte au moins les étapes suivantes :

    o mesurer le déphasage Δφ entre les signaux acquis respectivement sur la voie cosinus et sinus de l'antenne (401) ;
    o mesurer le rapport R entre les amplitudes des signaux acquis respectivement sur la voie cosinus et sinus de l'antenne (402) ;
    o déterminer l'angle d'ellipticité τ en fonction du déphasage Δφ et du rapport R (403) .

2. Procédé d'estimation de l'angle d'ellipticité τ de polarisation selon la revendication 1, **caractérisé en ce que** ledit angle d'ellipticité τ est déterminé par la relation suivante :

$$\sin(2.\tau) = \frac{2}{R + \dfrac{1}{R}} . \sin(\Delta\varphi)$$

avec $R = \dfrac{\left\|\overline{a}_c\right\|}{\left\|\overline{a}_s\right\|}$, $\left\|\overline{a}_c\right\|$ étant l'amplitude du signal reçu sur le cadre cosinus, et $\left\|\overline{a}_s\right\|$ étant l'amplitude du signal reçu sur le cadre sinus.

3. Procédé de discrimination des ondes ionosphériques des ondes de mer et/ou de sol, **caractérisé en ce qu'**il comprend au moins les étapes suivantes :

    o détecter une onde électromagnétique sur une antenne à cadres croisés ou un réseau antennaire de type Adcock ;
    ∘ déterminer (501) l'angle d'ellipticité τ de polarisation du signal de réponse d'antenne à l'onde reçue en exécutant les étapes du procédé selon l'une des revendications 1 et 2 ;
    ∘ tester (502) la valeur de l'angle d'ellipticité τ : si sa valeur est supérieure à une valeur de seuil choisie, alors classer ladite onde comme une onde ionosphérique (511).

4. Procédé de discrimination des ondes ionosphériques des ondes de mer et/ou de sol selon la revendication 3, **caractérisé en ce qu'**à l'issue du test (502) de la valeur d'angle d'ellipticité τ, si la valeur d'ellipticité est inférieure à la valeur de seuil choisie, alors classer ladite onde comme une onde de sol et/ou de mer (512).

5. Procédé de discrimination des ondes ionosphériques des ondes de mer et/ou de sol selon la revendication 3, **caractérisé en ce qu'**à l'issue du test de la valeur d'angle d'ellipticité τ, si cette valeur d'ellipticité est inférieure à la valeur de seuil choisie, alors réitérer l'étape de détection et tester (604) de manière récurrente au cours du temps la valeur de l'excursion de l'angle d'ellipticité τ : si cette excursion est supérieure à une deuxième valeur de seuil choisie, alors classer l'onde comme une onde ionosphérique.

6. Dispositif placé au sol ou en mer comprenant une antenne de réception (702) à cadres croisés ou un réseau antennaire de type Adcock et un module de traitement (701) mettant en oeuvre le procédé d'estimation de l'angle d'ellipticité τ selon l'une des revendications 1 et 2 afin de déterminer l'angle d'ellipticité τ de polarisation d'un signal de réponse de l'antenne à une onde électromagnétique reçue par l'antenne de réception ou le réseau antennaire.

**Patentansprüche**

1. Verfahren zum Schätzen der Polarisationselliptizität τ eines Antwortsignals einer Antenne mit kreuzförmigen Rahmen oder eines Antennennetzwerks des Adcock-Typs auf eine von der Antenne empfangene elektromagnetische Eingangswelle, **dadurch gekennzeichnet, dass** es wenigstens die folgenden Schritte beinhaltet:

◦ Messen der Phasenverschiebung Δφ zwischen den jeweils auf dem Kosinus- und Sinuskanal der Antenne (401) empfangenen Signalen;
◦ Messen des Verhältnisses R zwischen den Amplituden von jeweils auf dem Kosinus- und Sinuskanal der Antenne (402) empfangenen Signalen;
◦ Ermitteln des Elliptizitätswinkels τ in Abhängigkeit von der Phasenverschiebung Δφ und von dem Verhältnis R (403).

2. Verfahren zum Schätzen des Polarisationselliptizitätswinkels τ nach Anspruch 1, **dadurch gekennzeichnet, dass** der Elliptizitätswinkel τ anhand der folgenden Relation ermittelt wird:

$$\sin(2.\tau) = \frac{2}{R + \frac{1}{R}} . \sin(\Delta\varphi)$$

wobei $R = \dfrac{\|\overline{a}_c\|}{\|\overline{a}_s\|}$ ist, wobei $\|\overline{a}_c\|$ die Amplitude des auf dem Kosinusrahmen empfangenen Signals ist und $\|\overline{a}_s\|$ die Amplitude des auf dem Sinusrahmen empfangenen Signals ist.

3. Verfahren zum Unterscheiden zwischen ionosphärischen Wellen und Meeres- und/oder Bodenwellen, **dadurch gekennzeichnet, dass** es wenigstens die folgenden Schritte beinhaltet:

◦ Erkennen einer elektromagnetischen Welle auf einer Antenne mit kreuzföimigem Rahmen oder einem Antennennetzwerk des Adcock-Typs;
◦ Ermitteln (501) des Polarisationselliptizitätswinkels τ des Antennenantwortsignals auf die empfangene Welle unter Ausführung der Schritte des Verfahrens nach einem der Ansprüche 1 und 2;
◦ Testen (502) des Wertes des Elliptizitätswinkels τ: wenn der Wert größer als ein gewählter Schwellenwert ist, Einstufen der Welle als ionosphärische Welle (511).

4. Verfahren zum Unterscheiden zwischen ionosphärischen Wellen und Meeres- und/oder Bodenwellen nach Anspruch 3, **dadurch gekennzeichnet, dass** die Welle am Ausgang des Tests (502) des Elliptizitätswinkelwertes τ, wenn der Elliptizitätswert kleiner als der gewählte Schwellenwert ist, als eine Boden- und/oder Meereswelle (512) eingestuft wird.

**5.** Verfahren zum Unterscheiden zwischen ionosphärischen Wellen und Meeres- und/oder Bodenwellen nach Anspruch 3, **dadurch gekennzeichnet, dass** am Ausgang des Tests des Elliptizitätswinkelwertes τ, wenn dieser Elliptizitätswert kleiner als der gewählte Schwellenwert ist, der Schritt des Erkennens und Testens (604) des Ausschlags des Elliptizitätswinkels τ auf rekurrente Weise im Laufe der Zeit des Wertes wiederholt wird: wenn dieser Ausschlag größer ist als ein zweiter gewählter Schwellenwert, dann wird die Welle als ionosphärische Welle eingestuft.

**6.** Vorrichtung, die am Boden oder im Meer platziert ist und eine Empfangsantenne (702) mit kreuzförmigen Rahmen oder ein Antennennetzwerk des Adcock-Typs und ein Verarbeitungsmodul (701) zum Ausführen des Verfahrens zum Schätzen des Elliptizitätswinkels τ nach einem der Ansprüche 1 und 2 umfasst, um den Polarisationselliptizitätswinkel τ eines Antwortsignals der Antenne auf eine von der Empfangsantenne oder dem Antennennetz empfangene elektromagnetische Welle zu bestimmen.

**Claims**

**1.** A method for estimating the polarization ellipticity τ of a response signal of a crossed-loop antenna or an Adcock antenna array in response to an incident electromagnetic wave received on said antenna, **characterized in that** it comprises at least the following steps:

  ◦ measuring the phase offset Δφ between the signals acquired respectively on the cosine and sine path of the antenna (401);
  ◦ measuring the ratio R between the amplitudes of the signals acquired respectively on the cosine and sine path of the antenna (402);
  ◦ determining the ellipticity angle τ based on the phase offset Δφ and on the ratio R (403).

**2.** The method for estimating the polarization ellipticity angle τ as claimed in claim 1, **characterized in that** said ellipticity angle τ is determined by the following relation:

$$\sin(2.\tau) = \frac{2}{R + \frac{1}{R}} . \sin(\Delta\varphi)$$

where $R = \dfrac{\left\|\overline{a}_c\right\|}{\left\|\overline{a}_s\right\|}$, $\|\overline{a}_c\|$ being the amplitude of the signal received on the cosine loop, and $\|\overline{a}_s\|$ being the amplitude of the signal received on the sine loop.

**3.** A method for discriminating ionospheric waves from sea and/or ground waves, **characterized in that** it comprises at least the following steps:

  ◦ detecting an electromagnetic wave on a crossed-loop antenna or Adcock antenna array;
  ◦ determining (501) the polarization ellipticity angle τ of the antenna response signal to the received wave by carrying out the steps of the method as claimed in one of claims 1 and 2;
  ◦ testing (502) the ellipticity angle value τ: if its value is greater than a chosen threshold value, said wave is then classified as an ionospheric wave (511).

**4.** The method for discriminating ionospheric waves from sea and/or ground waves as claimed in claim 3, **characterized in that**, if, at the end of the test (502) of the ellipticity angle value τ, the ellipticity value is less than the chosen threshold value, said wave is then classified as a ground and/or sea wave (512).

**5.** The method for discriminating ionospheric waves from sea and/or ground waves as claimed in claim 3, **characterized in that**, if, at the end of the test of the ellipticity angle value τ, this ellipticity value is less than the chosen threshold value, the detection step is then reiterated and the value of the deviation of the ellipticity angle τ is tested (604) in a recurrent manner through time: if this deviation is greater than a second chosen threshold value, the wave is then classified as an ionospheric wave.

6. A device placed on the ground or in the sea, comprising a crossed-loop receive antenna (702) or an Adcock antenna array and a processing module (701) implementing the method for estimating the ellipticity angle $\tau$ as claimed in one of claims 1 and 2 in order to determine the polarization ellipticity angle $\tau$ of a response signal of the antenna to an electromagnetic wave received by the receive antenna or the antenna array.

FIG.1a

FIG.1b

211  230  222  212

221

216  226

217  227

# FIG.2a

220

211

221  230  222

210

200  212

# FIG.2b

FIG.3a

FIG.3b

401

402

403

$\tau$

FIG.4

501

511

512

502

FIG.5

501

603

511

512

604

FIG.6

700  701  702

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 2740389 A1